(19) **Europäisches Patentamt European Patent Office Office européen des brevets**

(11) **EP 3 786 476 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **20188909.4**

(22) Anmeldetag: **31.07.2020**

(51) Internationale Patentklassifikation (IPC):
***F16F 9/04*** *(2006.01)*

(52) Gemeinsame Patentklassifikation (CPC):
**F16F 9/0454**

(54) **LUFTFEDER UND VERFAHREN ZU DEREN HERSTELLUNG**

PNEUMATIC SPRING AND METHOD FOR THE PRODUCTION OF SAME

RESSORT PNEUMATIQUE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2019 DE 102019212637**

(43) Veröffentlichungstag der Anmeldung:
**03.03.2021 Patentblatt 2021/09**

(73) Patentinhaber: **ContiTech Deutschland GmbH 30175 Hannover (DE)**

(72) Erfinder:
• **Stöter, Bernd
30419 Hannover (DE)**

• **Hansen, Carsten
30419 Hannover (DE)**
• **Möllenbruck, Bernd
30419 Hannover (DE)**

(74) Vertreter: **Preusser, Andrea
ContiTech Deutschland GmbH
Intellectual Property
Philipsbornstraße 1
30165 Hannover (DE)**

(56) Entgegenhaltungen:
**EP-A1- 0 969 222         EP-A1- 2 998 610
DE-A1- 102008 025 905     DE-B4- 102008 025 905**

**Beschreibung**

Die Erfindung betrifft eine Luftfeder, beispielsweise einer Fahrzeugachse, mit einem schlauchförmigen Rollbalg aus einem elastomeren Werkstoff, der mindestens einen wulstlosen und kernlosen Endabschnitt aufweist, wobei dieser Endabschnitt mittels eines Klebstoffes an einer weitgehend zylindrischen Sitzfläche eines Anschlussteils befestigt ist. Die Erfindung betrifft außerdem ein Verfahren zur Herstellung einer derartigen Luftfeder.

Bei einer Luftfeder erfolgt die Befestigung eines Rollbalgs an einem Anschlussteil eines Luftfederdeckels oder eines Abrollkolbens üblicherweise über eine Klemmverbindung, bei welcher der betreffende Endabschnitt des Rollbalgs nach dem Aufschieben auf eine weitgehend zylindrische äußere Sitzfläche des zugeordneten Anschlussteils mittels eines bandförmigen Spannrings radial verspannt und dadurch druckdicht fixiert wird. Der zumeist aus einem Stahlblech oder Draht bestehende Spannring wird nach dem Auflegen auf den Endabschnitt des Rollbalgs mit einem geeigneten Werkzeug durch eine plastische Verformung umfangsseitig verkürzt, wodurch der Radius des Spannrings verringert und der Endabschnitt des Rollbalgs von dem Spannring radial auf die Sitzwand des Anschlussteils gepresst wird.

Eine derartige Klemmverbindung ist insofern kritisch, als sich fertigungsbedingte Toleranzen des Durchmessers der Sitzwand des Anschlussteils, der Dicke und des Durchmessers des Rollbalgs sowie des Durchmessers des Spannrings addieren. Hinzu kommt, dass ein als Spritzgussbauteil aus einem Thermoplast-Kunststoff hergestelltes Anschlussteil und der Spannring unterschiedliche Wärmedehnungskoeffizienten aufweisen. Hierdurch kommt es bei einer Abkühlung zur Lockerung der Klemmverbindung, indem sich der Durchmesser des außenliegenden metallischen Spannringes weniger verringert als der Klemmdurchmesser des Kunststoffanschlussteils.

Außerdem können starke Temperaturwechsel zu Setz- und Fließvorgängen des Rollbalgs und des Anschlussteils im Bereich der Klemmverbindung führen, die ebenfalls zur Lockerung der Klemmverbindung führen können. All dies kann zum Entweichen von Druckluft aus dem Innenraum der Luftfeder und im Extremfall zu einem Abrutschen des Rollbalgs von dem Anschlussteil führen. Daher ist eine exakte Zusammenstellung der an der Klemmverbindung beteiligten Bauteile sowie ein genaue Steuerung der Umformung des Spannrings erforderlich, um einerseits eine Undichtigkeit und ein Abrutschen des Rollbalgs von dem Anschlussteil bei zu schwacher Verpressung der Bauteile sowie andererseits eine Beschädigung des Anschlussteils und des Rollbalgs, insbesondere eine Quetschung des Rollbalgs, bei zu starker Verpressung der Bauteile zu verhindern.

Zur Verbesserung der Abdichtung und der Abrutschsicherheit der Klemmverbindung des Rollbalgs ist es bekannt, die Sitzwand des jeweiligen Anschlussteils konkav auszubilden und/oder mit umlaufenden Stegen oder Nuten zu profilieren. Der Endabschnitt des Rollbalgs wird dann durch den Spannring gegen die konkave Sitzwand gedrückt sowie unter elastischer Verformung auf die Stege und in die Nuten gepresst.

In der US 5 005 808 A sind mehrere Klemmverbindungen eines Rollbalgs mit den Anschlussteilen eines Luftfederdeckels und eines Abrollkolbens beschrieben, bei denen die Sitzwände zylindrisch eben oder konkav ausgebildet und jeweils mit mindestens zwei umlaufenden, im Profil spitzen oder gerundeten Nuten profiliert sind. Die Spannringe sind dagegen zylindrisch flach und an den Rändern gerundet ausgeführt. Im montierten Zustand werden die Endabschnitte des Rollbalgs durch die radiale Verspannung elastisch in die Wölbung und in die Nuten der Sitzwand gedrückt, durch die allerdings der Herstellungsaufwand für die Anschlussteile erhöht ist.

In einer Ausführung einer Klemmverbindung gemäß der DE 100 50 777 B4 weist die Sitzwand des Anschlussteils an ihren Rändern zwei umlaufende, zur Mitte hin gerundet oder flach auslaufende Nuten auf, die ein konvex gerundetes oder giebelförmiges Profil der Sitzwand ergeben. Der Spannring ist mittig entsprechend konvex gerundet oder abgewinkelt ausgeführt, so dass der betreffende Endabschnitt des Rollbalgs im montierten Zustand durch den Spannring elastisch in die Nuten der Sitzwand gedrückt wird. Der Herstellungsaufwand ist bei diesen Klemmverbindungen erhöht, weil nun neben den Sitzwänden der Anschlussteile auch die Klemmringe profiliert ausgeführt sind.

Eine ebenfalls bekannte Maßnahme zur Verbesserung der Abdichtung eines Rollbalgs an einem Anschlussteil besteht darin, mindestens ein ringförmiges Dichtelement zwischen der Sitzwand des Anschlussteils und dem Endabschnitt des Rollbalgs anzuordnen. So sind in der DE 197 40 981 A1 zwei Klemmverbindungen offenbart, bei denen in einer dortigen zweiten Ausführungsform ein aus einem Elastomerstreifen gebildetes Dichtelement zwischen der mit kleineren umlaufenden Nuten versehenen Sitzwand des Anschlussteils und dem Endabschnitt des Rollbalgs angeordnet ist. In einer dortigen vierten Ausführungsform ist ein aus einem breiteren Elastomerstreifen gebildetes Dichtelement am freien Ende um den Endabschnitt des Rollbalgs umgeschlagen und dadurch sowohl zwischen der Sitzwand des Anschlussteils und dem Endabschnitt des Rollbalgs als auch zwischen dem Endabschnitt des Rollbalgs und dem Spannring angeordnet. Durch die äußere Anordnung des Elastomerstreifens soll eine Beschädigung des Rollbalgs durch den Spannring verhindert werden.

Durch die Verwendung separater Dichtelemente ist zumindest der Montageaufwand erhöht und es besteht die Gefahr, dass das Dichtelement beim Ausschieben des Rollbalgs auf dem Anschlussteil verrutscht und sich somit nicht in der vorgesehenen Position befindet. Sofern Nuten in der jeweiligen Sitzfläche vorgesehen sind, ist auch der Herstellungsaufwand für diese Art von Klemmverbindungen erhöht. Eine weitere Möglichkeit zur Verbesserung der Abdichtung eines Rollbalgs an einem Anschlussteil besteht darin, mindestens ein ringförmiges Dichtelement bei der Herstellung des Rollbalgs einstückig an diesen anzuformen.

In einer Ausführung einer derartigen Klemmverbindung gemäß der DE 10 2006 033 197 A1 sind an einen Endabschnitt eines Rollbalgs auf der der Sitzwand des Anschlussteils zugewandten Seite zwei umlaufende Dichtlippen angeformt, die im montierten Zustand an die zylindrisch ebene Sitzwand des Anschlussteils angedrückt werden.

In einer Ausführungsform einer derartigen Klemmverbindung gemäß der DE 10 2010 036 363 A1 ist an einen Endabschnitt eines Rollbalgs auf der der Sitzwand des Anschlussteils zugewandten Seite ein umlaufender Dichtring mit kreisrundem Querschnitt angeformt, der über einen umlaufenden Steg mit der Wand des Rollbalgs verbunden ist. Im montierten Zustand wird der Dichtring unter elastischer Verformung von dem zylindrisch flach ausgeführten Spannring in eine in der Sitzwand angeordnete umlaufende Nut mit rechteckigem Querschnitt gedrückt.

Durch die Verwendung angeformter Dichtelemente ist zumindest der Herstellungsaufwand für die Rollbälge erhöht. Zudem besteht die Gefahr, dass die Dichtelemente beim Ausschieben des jeweiligen Rollbalgs auf das zugeordnete Anschlussteil beschädigt oder sogar abgeschert werden. Sofern mindestens eine Nut in der jeweiligen Sitzfläche vorgesehen ist, ist auch der Herstellungsaufwand für das Anschlussteil erhöht.

Schließlich kann bei einer Klemmverbindung eines Rollbalgs mit einem Anschlussteil auch ein geeigneter Klebstoff oder ein Dichtmittel zur Abdichtung verwendet werden. Eine entsprechende Klemmverbindung, bei der vor dem Aufschieben des Rollbalgs auf das Anschlussteil ein Klebstoff auf die Sitzfläche des Anschlussteils oder den betreffenden Abschnitt des Rollbalgs aufgetragen wird, ist aus der DE 10 2008 025 905 A1 bekannt. Bei den dortigen Klemmverbindungen ist vorgesehen, dass der Klebstoff flächendeckend auf die Sitzfläche des Anschlussteils oder einen dem entsprechenden Abschnitt des Rollbalgs aufgetragen wird. Bei geringen Drücken soll der Rollbalg alleine durch den Klebstoff an dem Anschlussteil halten. Bei einer anderen Ausführungsform dieser Klemmverbindung ist vorgesehen, dass der Klebstoff in eine in der Sitzfläche angeordnete Ringnut oder in mehrere in der Sitzfläche angeordnete Ringnuten eingebracht wird, und dass der Endabschnitt mittels eines zusätzlich notwendigen bandförmigen Spannrings bei Anwendungen mit nicht geringen Drücken gegen die Sitzfläche gepresst und dadurch auf dem Anschlussteil fixiert ist.

Bei einer ähnlichen Klemmverbindung gemäß der DE 10 2016 219 813 A1 wird bei der Montage nach dem Aufschieben eines Rollbalgs auf ein Anschlussteil und dessen radiale Verspannung durch einen Spannring ein dauerviskoses Dichtmittel in einen Ringspalt zwischen dem Anschlussteil und dem Rollbalg eingebracht. Durch die Verwendung eines Klebstoffes oder eines Dichtmittels zur Abdichtung der Klemmverbindung ist der Montageaufwand der Klemmverbindung entsprechend erhöht.

Das Dokument DE 10 2008 025905 A1, welches als der nächstliegende Stand der Technik angesehen wird, offenbart die Merkmale des Oberbegriffs des Anspruchs 1.

Bei den genannten Ausführungen von Klemmverbindungen eines Rollbalgs an einem Anschlussteil sind die Probleme, dass die Klemmverbindungen durch die unterschiedlichen Wärmedehnungskoeffizienten des Anschlussteils und des Spannrings sowie durch Setzund Fließvorgänge des Materials des Rollbalgs und des Anschlussteils gelockert sowie undicht werden können, entweder nicht oder nur mit hohem Herstellungs- und/oder Montageaufwand gelöst.

Der Erfindung lag daher die Aufgabe zugrunde, eine Luftfeder der eingangs genannten Bauart vorzustellen, bei der zumindest ein wulstloser und kernloser Endabschnitt eines Rollbalgs auf einfache sowie kostengünstige Weise mechanisch zuverlässig und druckdicht an einem Anschlussteil eines Luftfederdeckels oder eines Abrollkolbens befestigt ist. Außerdem sollte ein Verfahren zur Herstellung einer derartigen Luftfeder beschrieben werden.

Die produktbezogene Aufgabe ist durch eine Luftfeder mit den Merkmalen des Anspruchs 1 gelöst. In einem unabhängigen Verfahrensanspruch ist ein Verfahren zur Herstellung einer solchen Luftfeder angegeben. Vorteilhafte Weiterbildungen sind in den zugeordneten abhängigen Ansprüchen definiert.

Demnach betrifft die Erfindung eine Luftfeder, beispielsweise einer Fahrzeugachse, mit einem schlauchförmigen Rollbalg aus einem elastomeren Werkstoff, der mindestens einen wulstlosen und kernlosen Endabschnitt aufweist, wobei dieser Endabschnitt mittels eines Klebstoffes an einer weitgehend zylindrischen Sitzfläche eines Anschlussteils befestigt ist. Das Anschlussteil ist auf seiner dem Rollbalg zugewandten Seite topfförmig ausgebildet und weist eine Seitenwand mit einer zylindrischen Innenfläche sowie eine Bodenwand auf, und dass der Endabschnitt des Rollbalgs ohne einen Spannring mittels des Klebstoffes an der als Sitzfläche wirksamen Innenfläche der Seitenwand befestigt ist.

Um zumindest einen wulst- und kernlosen Endabschnitt eines Rollbalgs auf einfache und kostengünstige Weise mechanisch zuverlässig sowie druckdicht an einem Anschlussteil eines Luftfederdeckels oder eines Abrollkolbens befestigen zu können, ist demnach das betreffende Anschlussteil auf der dem Rollbalg zugewandten Seite topfförmig ausgebildet. Es weist dabei eine kreisförmige Seitenwand mit einer zylindrischen Innenfläche sowie eine zumindest weitgehend ebene Bodenwand auf. Der zugeordnete Endabschnitt des Rollbalgs ist ohne einen Spannring beziehungsweise Klemmring nur mittels des Klebstoffes stoffschlüssig an der als Sitzfläche wirksamen Innenfläche der Seitenwand des Anschlussteils befestigt.

Durch den Verzicht auf einen Spannring ist das Problem der unterschiedlichen Wärmedehnungskoeffizienten des Anschlussteils sowie des Spannrings eliminiert und die Montage des Rollbalgs an dem Anschlussteil vereinfacht. Die Klebeverbindung ist aufgrund der einfachen Geometrie des Anschlussteils und der an der Seitenwand ausgebildeten Sitzfläche einfach sowie kostengünstig herstellbar. Bei Verwendung eines geeigneten Klebstoffes ist die Verbindung des Rollbalgs mit dem Anschlussteil mechanisch zuverlässig und druckdicht. Die Verklebung erfolgt demnach im Wesentlichen zwischen der Balgaußenfläche und der Innenseite der Seitenwand des Anschlussteils, wodurch der geklebte Bereich im Betrieb des Rollbalgs auf Scherung und nicht auf eine schädliche Schälbeanspruchung belastet wird.

Da der aus einem Elastomermaterial hergestellte Rollbalg naturgemäß vergleichsweise große Toleranzen bei seinem Durchmesser und seiner Wanddicke aufweist, bereitet dessen optimale Verklebung mit einem exakt hergestellten metallischen Anschlussteil durchaus Schwierigkeiten. Es soll schließlich eine vollflächige Anpressung des festzuklebenden Endabschnitts des Rollbalgs an der Sitzfläche des Anschlussteils erreicht werden.

Um eine möglichst gute Klebeverbindung realisieren zu können, ist erfindungsgemäß vorgesehen, dass der axiale Endabschnitt des Rollbalgs im Bereich der Seitenwand des Anschlussteils über dessen Umfang radial gestaucht ist. Durch diese mechanische Verformung sind fertigungsbedingt auftretende Abmessungstoleranzen des Rollbalgs eliminiert, in dessen Ergebnis der Rollbalg über seinen gesamt Umfang flächenbündig an der Sitzfläche der Seitenwand des Anschlussteils anliegt. Hierdurch ist eine optimale Klebung gewährleistet. Die für eine optimale Klebeverbindung erforderliche radiale Anpresskraft wird durch diejenige radial nach außen gerichtete Gegenkraft aufgebracht, welche als Reaktion auf die radial nach innen gerichtete Stauchung des Rollbalgs und eine so erzeugte Eigenspannung an diesem wirkt. Das Anordnen und Wirksamwerden lassen eines gesonderten Spannrings wie bei Stand der Technik ist daher nicht notwendig.

Hierbei ist vorgesehen, dass der Außendurchmesser $D_{B\_a}$ des Rollbalgs im Bereich des Endabschnittes im radial ungestauchten Zustand unter Berücksichtigung ungünstigster Bauteiltoleranzen und Wärmedehnungen größer als der Durchmesser $D_{S\_i}$ der Sitzfläche des Anschlussteils ist ($D_{B\_a} > D_{S\_i}$). Damit ist sichergestellt, dass die Stauchung des Endabschnittes des Rollbalgs und damit die radiale Verspannung des Rollbalgs mit dem Anschlussteil unter allen Betriebsbedingungen erhalten bleiben.

Für die Stauchung des Endabschnittes des Rollbalgs beim axialen Einschieben in das Anschlussteil kann vorgesehen sein, dass die Seitenwand des Anschlussteils für die Stauchung des Endabschnittes des Rollbalgs einen axial äußeren Montageabschnitt mit einer konischen Innenfläche aufweist, wobei der axial innere Durchmesser $D_{K\_i}$ der konischen Innenfläche dem Durchmesser $D_{S\_i}$ der Sitzfläche entspricht ($D_{K\_i} = D_{S\_i}$), und der axial äußerer Durchmesser $D_{K\_a}$ der konischen Innenfläche unter Berücksichtigung ungünstigster Bauteiltoleranzen und Wärmedehnungen größer als der Außendurchmesser $D_{B\_a}$ des Rollbalgs im Bereich des Endabschnittes ist ($D_{K\_a} > D_{B\_a}$).

Alternativ dazu kann vorgesehen sein, dass für die radiale Stauchung des Endabschnittes des Rollbalgs der axiale Außenrand der Seitenwand des Anschlussteils derart ausgebildet ist, dass auf diesem ein Montagewerkzeug mit einem zylindrischen Ringkörper und einer radial innen konischen Innenfläche aufsetzbar ist, wobei die konische Innenfläche einen axial inneren Durchmesser $D_{K\_i}$ aufweist, welcher dem Durchmesser $D_{S\_i}$ der Sitzfläche entspricht ($D_{K\_i} = D_{S\_i}$), und deren axial äußerer Durchmesser $D_{K\_a}$ unter Berücksichtigung ungünstigster Bauteiltoleranzen und Wärmedehnungen größer als der Außendurchmesser $D_{B\_a}$ des Rollbalgs im Bereich des Endabschnittes ist ($D_{K\_a} > D_{B\_a}$).

Zum Schutz gegen ein Abstreifen des Klebstoffes ist die Sitzfläche des Anschlussteils axial außen beispielsweise durch einen umlaufenden Wulst begrenzt. Ein derartiger Wulst kommt bevorzugt bei der Verwendung einer dickeren Klebstoffschicht zur Anwendung.

Zur exakten und faltenfreien Positionierung des Außenrandes des Rollbalgs am Innenrand der Sitzfläche und an der Bodenwand ist bevorzugt vorgesehen, dass auf der Bodenwand des Anschlussteils wenigstens ein ringförmiger Sitzsteg angeordnet ist, dessen radialer Abstand $\Delta Rs$, $\Delta Rs'$ von der Sitzfläche weitgehend der Summe aus der Dicke $d_B$ des Endabschnittes des Rollbalgs und der Dicke $d_K$, $d_K'$ der Klebstoffschicht entspricht ($\Delta Rs \approx d_B + d_K$; $\Delta R_S' \approx d_B + d_K'$).

Um beim axialen Einschieben des Rollbalgs in das Anschlussteil beim Stauchen des Endabschnittes des Rollbalgs an der konischen Innenfläche des Anschlussteils oder des Montagewerkzeugs die Bildung von Falten zu verhindern, kann vorgesehen sein, dass auf der Bodenwand und dem Sitzsteg des Anschlussteils umfangsseitig gleichmäßig verteilt mehrere radiale Führungsstege angeordnet sind, deren jeweilige radiale Außenfläche konisch abgeschrägt und in Bezug zur radialen Außenfläche des wenigstens einen Sitzsteges in einem Winkel von 1° bis 35°, vorzugsweise von 10° bis 20° radial nach innen geneigt ist. Diese Winkelangaben schließen die genannten Bereichsgrenzen ein.

Die Erfindung betrifft wie erwähnt auch ein Verfahren zur Herstellung der erläuterten Luftfeder, bei der ein wulstloser und kernloser Endabschnitt eines schlauchförmigen Rollbalgs mittels eines Klebstoffes an einer weitgehend zylindrischen Sitzfläche eines Anschlussteils befestigt wird, mit den folgenden Verfahrensschritten:

a) Aufbringen des Klebstoffes auf eine als Sitzfläche wirksame zylindrische Innenfläche einer Seitenwand des auf der dem Rollbalg zugewandten Seite topfförmig ausgebildeten Anschlussteils,

b) umfangsseitige und radiale Stauchung des Endabschnittes des Rollbalgs, und

c) axiales Einschieben des Rollbalgs in das Anschlussteil mit dem Endabschnitt des Rollbalgs auf die Sitzfläche des Anschlussteils.

Die radial nach innen gerichtete Stauchung des Endabschnitts des Rollbalgs bewirkt in diesem eine Eigenspannung, welche eine nach radial außen gerichtete Gegenkraft erzeugt. Diese Gegenkraft sorgt dafür, dass der Endabschnitt des Rollbalgs vollflächig gegen den Klebstoff an der Sitzfläche des Anschlussteils gepresst wird, so dass eine sehr gute Klebeverbindung entsteht.

Gemäß einer ersten Verfahrensvariante ist vorgesehen, dass der Endabschnitt des Rollbalgs durch axiales Einschieben in das Anschlussteils an einem äußeren Montageabschnitt der Seitenwand des Anschlussteils mit einer konischen Innenfläche radial nach innen gestaucht wird, deren axial innerer Durchmesser $D_{K\_i}$ dem Durchmesser $D_{S\_i}$ der Sitzfläche entspricht ($D_{K\_i} = D_{S\_i}$), und deren axial äußerer Durchmesser $D_{K\_a}$ unter Berücksichtigung ungünstigster Bauteiltoleranzen und Wärmedehnungen größer als der Außendurchmesser $D_{B\_a}$ des Rollbalgs im Bereich des Endabschnittes ist ($D_{K\_a} > D_{B\_a}$).

Eine dazu alternative zweite Verfahrensvariante sieht vor, dass der Endabschnitt des Rollbalgs durch axiales Einschieben in ein zuvor auf die Seitenwand des Anschlussteils aufgesetztes Montagewerkzeug mit einem zylindrischen Ringkörper und einer konischen Innenfläche radial nach innen gestaucht wird, deren axial innerer Durchmesser $D_{K\_i}$ dem Durchmesser $D_{S\_i}$ der Sitzfläche entspricht ($D_{K\_i} = D_{S\_i}$), und deren axial äußerer Durchmesser $D_{K\_a}$ unter Berücksichtigung ungünstigster Bauteiltoleranzen und Wärmedehnungen größer als der Außendurchmesser $D_{B\_a}$ des Rollbalgs im Bereich des Endabschnittes ist ($D_{K\_a} > D_{B\_a}$).

Zur weiteren Verdeutlichung der Erfindung ist der Beschreibung eine Zeichnung mit drei Ausführungsbeispielen beigefügt. In dieser zeigt

Fig. 1 eine erste Ausführungsform einer erfindungsgemäßen Luftfeder vor der Montage in einer ausschnittsweisen Querschnittsansicht,

Fig. 2 das Anschlussteil der Luftfeder gemäß Fig. 1 in einer ausschnittsweisen Axialansicht,

Fig. 3 die Luftfeder gemäß Fig. 1 und Fig. 2 im montierten Zustand in einer ausschnittsweisen Querschnittsansicht,

Fig. 4 eine zweite Ausführungsform einer erfindungsgemäßen Luftfeder vor der Montage in einer ausschnittsweisen Querschnittsansicht, und

Fig. 5 eine dritte Ausführungsform einer erfindungsgemäßen Luftfeder im montierten Zustand in einer ausschnittsweisen Querschnittsansicht.

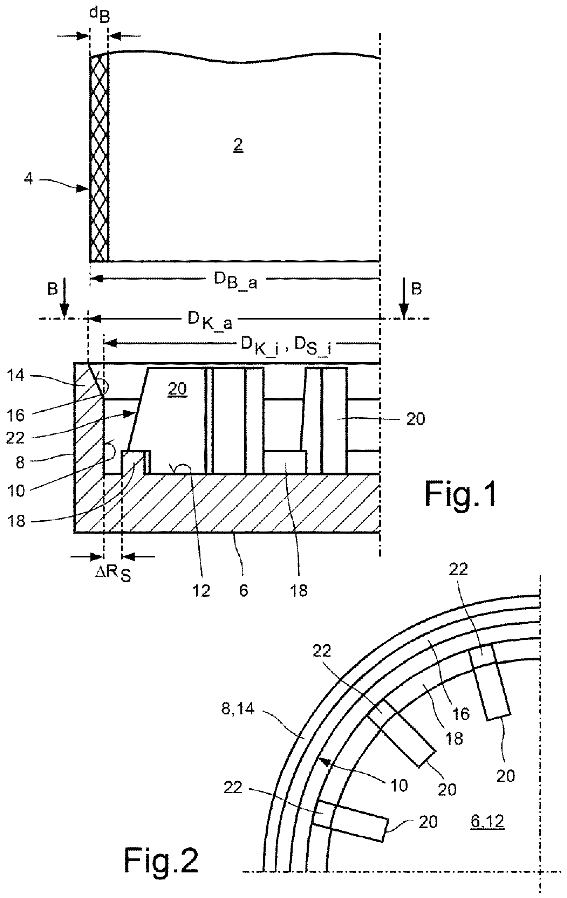

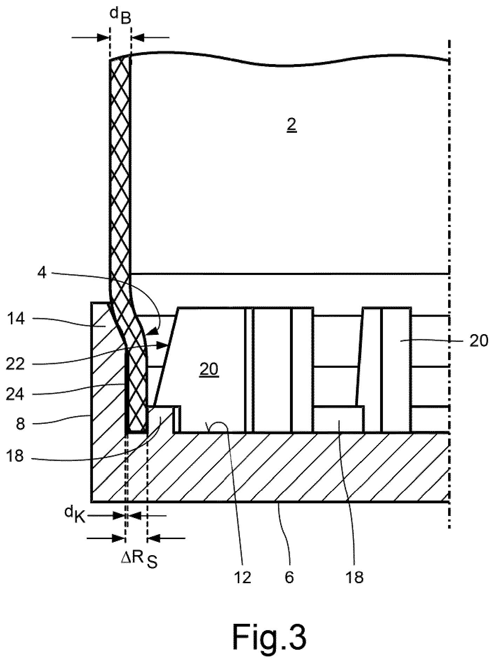

Entsprechend der in Fig. 1 gezeigten ersten Ausführungsform einer erfindungsgemäßen Luftfeder 1 weist diese einen schlauchförmigen Rollbalg 2 mit einem wulstlosen und kernlosen axialen Endabschnitt 4 sowie ein Anschlussteil 6 eines Luftfederdeckels oder eines Abrollkolbens auf. Diese Bauteile 4, 6 sind in Fig. 1 vor deren Zusammenbau und in Fig. 3 im montierten Zustand dargestellt. In Fig. 2 ist das Anschlussteil 6 in einer ausschnittsweisen Axialansicht aus der Blickrichtung B-B gemäß Fig. 1 dargestellt.

Das Anschlussteil 6 ist auf seiner dem Rollbalg 2 zugewandten axialen Seite topfförmig ausgebildet und weist eine Seitenwand 8 mit einer zylindrischen Innenfläche 10 sowie eine weitgehend ebene Bodenwand 12 auf. Im montierten Zustand gemäß Fig. 3 ist der Endabschnitt 4 des Rollbalgs 2 ohne einen Spannring mittels eines aufgetragenen Klebstoffes 24 an der als Sitzfläche wirksamen Innenfläche 10 der Seitenwand 8 befestigt.

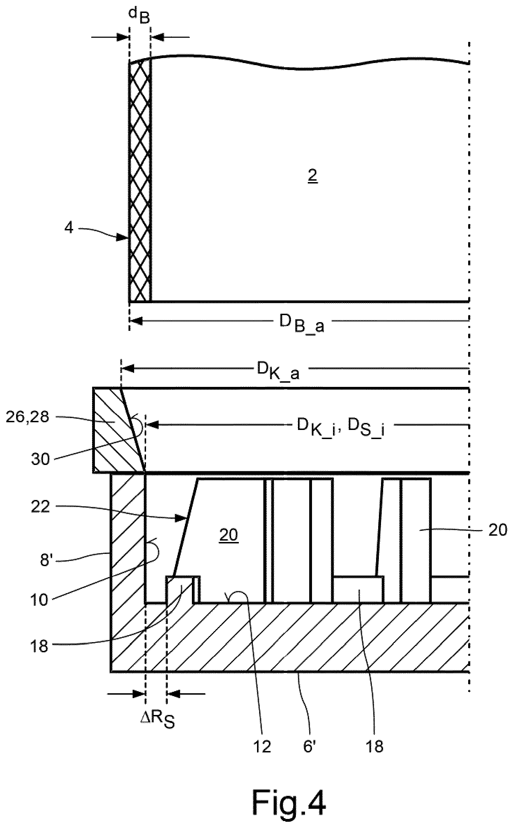

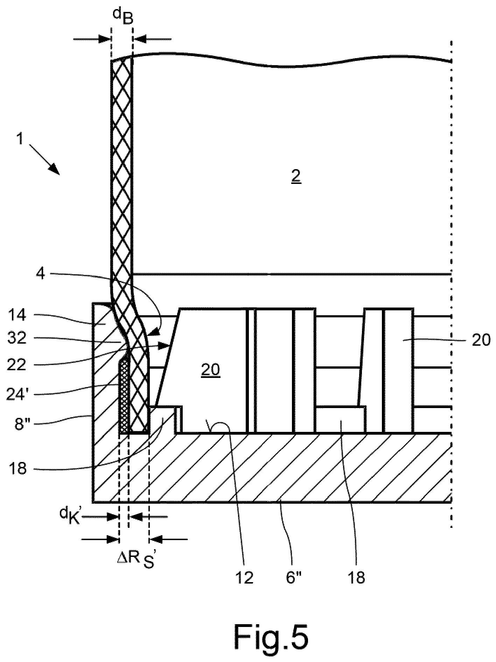

Damit der Endabschnitt 4 des Rollbalgs 2 in seiner Verbindungsposition unter anderem einen für eine optimale Klebeverbindung konstanten Außendurchmesser aufweist, wird dieser bei seinem axialen Einschieben in das Anschlussteil 6 gemäß den Figuren 1 und 3 beziehungsweise den Figuren 4 und 5 über seinen gesamten Umfang nach radial innen gestaucht. Als Antwort auf diese nach radial innen gerichtete Stauchung erzeugt der Rollbalg 2 als Nebeneffekt zur Harmonisierung seines Außendurchmessers eine radial nach außen gerichtete Kraft, welche diesen an die Sitzfläche 10 der Seitenwand 8 des Anschlussteils 6 drückt. Hierdurch ist auch ohne eine auf den Rollbalg 2 von radial innen nach radial außen wirkenden Kraft eines Spannrings oder Klemmrings eine optimale Kontaktierung der Balgwand mit der Sitzfläche 10 der Seitenwand 8 des Anschlussteils 6 während des Abbindens der Klebeverbindung erreicht.

Hierbei ist vorgesehen, dass der Außendurchmesser $D_{B\_a}$ des Rollbalgs 2 im Bereich des Endabschnittes 4 im ungestauchten Zustand unter Berücksichtigung ungünstigster Bauteiltoleranzen und Wärmedehnungen größer als der Durchmesser $D_{S\_i}$ der Sitzfläche 10 des Anschlussteils 6 ist ($D_{B\_a} > D_{S\_i}$).

Für die Erzeugung der Stauchung des Endabschnittes 4 des Rollbalgs 2 weist die Seitenwand 8 des Anschlussteils 6 einen axial äußeren Montageabschnitt 14 mit einer konischen Innenfläche 16 auf, deren axial innerer Durchmesser $D_{K\_i}$ dem Durchmesser $D_{S\_i}$ der Sitzfläche 10 entspricht ($D_{K\_i} = D_{S\_i}$), und deren axial äußerer Durchmesser $D_{K\_a}$ unter Berücksichtigung ungünstigster Bauteiltoleranzen und Wärmedehnungen größer als der Außendurchmesser $D_{B\_a}$ des Rollbalgs 2 im Bereich des Endabschnittes 4 ist ($D_{K\_a} > D_{B\_a}$).

Zur exakten und faltenfreien Positionierung des Außenrandes des Rollbalgs 2 am Innenrand der Sitzfläche 10 sowie an der Bodenwand 12 ist auf der Bodenwand 12 des Anschlussteils 6 ein ringförmiger Sitzsteg 18 angeordnet oder ausgebildet, dessen radialer Abstand ΔRs von der Sitzfläche 10 weitgehend der Summe aus der Dicke $d_B$ des Endabschnittes 4 des Rollbalgs 2 und der Dicke $d_K$ der Klebstoffschicht 24 entspricht (ΔRs ≈ $d_B$ + $d_K$).

Um beim axialen Einschieben des Rollbalgs 2 in das Anschlussteil 6 beim Stauchen des Endabschnittes 4 des Rollbalgs 2 an der konischen Innenfläche 16 des Montageabschnittes 14 die Bildung von Falten zu verhindern, sind auf der Bodenwand 12 und dem Sitzsteg 18 des Anschlussteils 6 umfangsseitig gleichmäßig verteilt mehrere radiale Führungsstege 20 angeordnet, deren jeweilige radiale Außenfläche 22 konisch abgeschrägt und in Bezug zur radialen Außenfläche des wenigstens einen Sitzsteges 18 in einem Winkel von 10° bis 20° radial nach innen geneigt ist. Vorliegend sind beispielhaft insgesamt zwölf Führungsstege 20 vorgesehen, die umfangsseitig um 30° versetzt auf der Bodenwand 12 und dem Sitzsteg 18 des Anschlussteils 8 angeordnet sind.

Gemäß einer zweiten Ausführungsform der erfindungsgemäßen Luftfeder sind in Fig. 4 in einer ausschnittsweisen Querschnittsansicht ein wulstloser und kernloser Endabschnitt 4 eines schlauchförmigen Rollbalgs 2 sowie ein Anschlussteil 6' eines Luftfederdeckels oder eines Abrollkolbens vor der Montage abgebildet. Diese Luftfeder unterscheidet sich von der Luftfeder gemäß den Figuren 1 bis 3 dadurch, dass für die Stauchung des Endabschnittes 4 des Rollbalgs 2 anstelle des Montageabschnittes 14 mit der konischen Innenfläche 16 nun ein auf den axialen Außenrand der Seitenwand 8' des Anschlussteils 6' aufsetzbares Montagewerkzeug 26 mit einem zylindrischen Ringkörper 28 und einer konischen Innenfläche 30 vorgesehen ist. Der axial innerer Durchmesser $D_{K\_i}$ der konischen Innenfläche 30 entspricht dabei dem Durchmesser $D_{S\_i}$ der Sitzfläche ($D_{K\_i}$ = $D_{S\_i}$), und der axial äußerer Durchmesser $D_{K\_a}$ der konischen Innenfläche 30 ist unter Berücksichtigung ungünstigster Bauteiltoleranzen und Wärmedehnungen größer als der Außendurchmesser $D_{B\_a}$ des Rollbalgs 2 im Bereich des Endabschnittes 4 des Rollbalgs 2 ($d_{K\_a}$ > $d_{B\_a}$).

Fig. 5 zeigt in einer ausschnittsweisen Querschnittsansicht eine dritte Ausführungsform der erfindungsgemäßen Luftfeder im montierten Zustand, welche ebenfalls einen schlauchförmigen Rollbalg 2 mit einem wulstlosen und kernlosen Endabschnitt 4 sowie ein Anschlussteil 6" eines Luftfederdeckels oder eines Abrollkolbens aufweist.

Diese Luftfeder unterscheidet sich von den Luftfedern gemäß den Figuren 1 bis 3 dadurch, dass nun eine dickere Klebstoffschicht 24' auf die Sitzfläche 10 der Seitenwand 8" aufgetragen ist, und dass die Sitzfläche 10 des Anschlussteils 6" zum Schutz gegen ein Abstreifen des Klebstoffes 24' axial außen durch einen umlaufenden, nach radial innen ragenden Wulst 32 begrenzt ist.

Bei allen drei Ausführungsformen der Luftfeder 1 ist der Endabschnitt 4 des Rollbalgs 2 jeweils ohne einen Spannring nur mittels des Klebstoffes 24, 24' stoffschlüssig an der Sitzfläche 10 des Anschlussteils 6', 6" befestigt. Diese Klebeverbindung ist aufgrund der einfachen Geometrie des Anschlussteils 6, 6', 6" und der an der Seitenwand 8, 8', 8" ausgebildeten Sitzfläche 10 einfach sowie kostengünstig herstellbar und bildet bei Verwendung eines geeigneten Klebstoffes 24, 24' eine mechanisch zuverlässige und druckdichte Verbindung des Rollbalgs 2 mit dem Anschlussteil 6, 6', 6".

**Bezugszeichenliste**

| | |
|---|---|
| 1 | Luftfeder |
| 2 | Rollbalg |
| 4 | Endabschnitt |
| 6, 6', 6" | Anschlussteil |
| 8, 8', 8" | Seitenwand |
| 10 | Innenfläche, Sitzfläche |
| 12 | Bodenwand |
| 14 | Montageabschnitt |
| 16 | Innenfläche |
| 18 | Sitzsteg |
| 20 | Führungssteg |
| 22 | Außenfläche |
| 24, 24' | Klebstoff, Klebstoffschicht |
| 26 | Montagewerkzeug |
| 28 | Ringkörper |
| 30 | Innenfläche |
| 32 | Wulst |
| B | Blickrichtung |
| $d_B$ | Dicke des Endabschnitts des Rollbalgs |
| $D_{B\_a}$ | Außendurchmesser des Endabschnitts des Rollbalgs |
| $d_K$, $d_K'$ | Dicke des Klebstoff oder der Klebstoffschicht |
| $D_{K\_a}$ | Axial äußerer Durchmesser der Innenfläche 16 oder 30 |
| $D_{K\_i}$ | Axial innerer Durchmesser der Innenfläche 16 oder 30 |
| $D_{S\_i}$ | Durchmesser der Sitzfläche 10 |
| $ΔR_S$, $ΔR_S'$ | Radialer Abstand |

**Patentansprüche**

1. Luftfeder (1), beispielsweise einer Fahrzeugachse, mit einem schlauchförmigen Rollbalg (2) aus einem elastomeren Werkstoff, der mindestens einen wulstlosen und kernlosen Endabschnitt (4) aufweist, wobei dieser Endabschnitt (4) mittels eines Klebstoffes (24, 24') an einer weitgehend zylindrischen Sitzfläche (10) eines Anschlussteils (6, 6', 6") befestigt ist, wobei das Anschlussteil (6, 6', 6") auf seiner dem Rollbalg (2) zugewandten Seite topfförmig ausgebildet ist und eine Seitenwand (8, 8', 8") mit einer zylindrischen Innenfläche (10) sowie eine Bodenwand (12) aufweist, und dass der Endabschnitt (4) des Rollbalgs (2) ohne einen Spannring mittels des Klebstoffes (24, 24') an der als Sitzfläche wirksamen Innenfläche (10) der Seitenwand (8, 8', 8") befestigt ist **dadurch gekennzeichnet, dass** der Endabschnitt (4) des Rollbalgs (2) im Bereich der Seitenwand (8, 8', 8") des Anschlussteils (6, 6', 6") über dessen Umfang radial gestaucht ist.

2. Luftfeder nach Anspruch 1, **dadurch gekennzeichnet, dass** der Außendurchmesser ($D_{B\_a}$) des Rollbalgs (2) im Bereich des Endabschnittes (4) im radial ungestauchten Zustand unter Berücksichtigung ungünstigster Bauteiltoleranzen und Wärmedehnungen größer als der Durchmesser ($D_{S\_i}$) der Sitzfläche (10) des Anschlussteils (6, 6', 6") ist ($D_{B\_a} > D_{S\_i}$).

3. Luftfeder nach Anspruch 1 oder 2, **dadurch gekennzeichnet, dass** die Seitenwand (8) des Anschlussteils (6) für die Stauchung des Endabschnittes (4) des Rollbalgs (2) einen axial äußeren Montageabschnitt (14) mit einer konischen Innenfläche (16) aufweist, wobei der axial innere Durchmesser ($D_{K\_i}$) der konischen Innenfläche (16) dem Durchmesser ($D_{S\_i}$) der Sitzfläche (10) entspricht ($D_{K\_i} = D_{S\_i}$), und der axial äußerer Durchmesser ($D_{K\_a}$) der konischen Innenfläche (16) unter Berücksichtigung ungünstigster Bauteiltoleranzen und Wärmedehnungen größer als der Außendurchmesser ($D_{B\_a}$) des Rollbalgs (2) im Bereich des Endabschnittes (4) ist ($D_{K\_a} > D_{B\_a}$).

4. Luftfeder nach einem der Ansprüche 1 bis 2, **dadurch gekennzeichnet, dass** für die radiale Stauchung des Endabschnittes (4) des Rollbalgs (2) der axiale Außenrand der Seitenwand (8') des Anschlussteils (6') derart ausgebildet ist, dass auf diesem ein Montagewerkzeug (26) mit einem zylindrischen Ringkörper (28) und einer radial innen konischen Innenfläche (30) aufsetzbar ist, wobei die konische Innenfläche (30) einen axial inneren Durchmesser ($D_{K\_i}$) aufweist, welcher dem Durchmesser ($D_{S\_i}$) der Sitzfläche (10) entspricht ($D_{K\_i} = D_{S\_i}$), und deren axial äußerer Durchmesser ($D_{K\_a}$) unter Berücksichtigung ungünstigster Bauteiltoleranzen und Wärmedehnungen größer als der Außendurchmesser ($D_{B\_a}$) des Rollbalgs (2) im Bereich des Endabschnittes (4) ist ($D_{K\_a} > D_{B\_a}$).

5. Luftfeder nach einem der Ansprüche 1 bis 4, **dadurch gekennzeichnet, dass** die Sitzfläche (10) der Seitenwand (8") des Anschlussteils (6") zum Schutz gegen ein Abstreifen des Klebstoffes (24') axial außen durch einen umlaufenden Wulst (32) begrenzt ist.

6. Luftfeder nach einem der Ansprüche 1 bis 5, **dadurch gekennzeichnet, dass** auf der Bodenwand (12) des Anschlussteils (6, 6', 6") wenigstens ein ringförmiger Sitzsteg (18) angeordnet ist, dessen radialer Abstand ($\Delta Rs$, $\Delta Rs'$) von der Sitzfläche (10) weitgehend der Summe aus der Dicke ($d_B$) des Endabschnittes (4) des Rollbalgs (2) und der Dicke ($d_K$, $d_K'$) der Klebstoffschicht (24, 24') entspricht

$$(\Delta R_S \approx d_B + d_K; \ \Delta R_S' \approx d_B + d_K').$$

7. Luftfeder nach einem der Ansprüche 1 bis 6, **dadurch gekennzeichnet, dass** auf der Bodenwand (12) und dem Sitzsteg (18) des Anschlussteils (6, 6', 6") umfangsseitig gleichmäßig verteilt mehrere radiale Führungsstege (20) angeordnet sind, deren jeweilige radiale Außenfläche (22) konisch abgeschrägt und in Bezug zur radialen Außenfläche des wenigstens einen Sitzsteges (18) in einem Winkel von 10° bis 20° radial nach innen geneigt ist.

8. Verfahren zur Herstellung einer Luftfeder (1), bei der ein wulstloser und kernloser Endabschnitt (4) eines schlauchförmigen Rollbalgs (2) mittels eines Klebstoffes (24, 24') an einer weitgehend zylindrischen Sitzfläche (10) eines Anschlussteils (6, 6', 6") befestigt wird, mit den folgenden Verfahrensschritten:

   a) Aufbringen des Klebstoffes (24, 24') auf eine als Sitzfläche wirksame zylindrische Innenfläche (10) einer Seitenwand (8, 8', 8") des auf der dem Rollbalg (2) zugewandten Seite topfförmig ausgebildeten Anschlussteils (6, 6', 6"),
   b) umfangsseitige und radiale Stauchung des Endabschnittes (4) des Rollbalgs (2), und
   c) axiales Einschieben des Rollbalgs (2) in das Anschlussteil (6, 6', 6") mit dem Endabschnitt (4) des Rollbalgs (2) auf die Sitzfläche (10) des Anschlussteils (6, 6', 6").

9. Verfahren zur Herstellung einer Luftfeder nach Anspruch 8, **dadurch gekennzeichnet, dass** der Endabschnitt (4) des Rollbalgs (2) durch axiales Einschieben in das Anschlussteils (6, 6', 6") an einem äußeren Montageabschnitt (14) der Seitenwand (8) des Anschlussteils (6) mit einer konischen Innenfläche (16) radial nach innen gestaucht wird, deren axial innerer Durchmesser ($D_{K\_i}$) dem Durchmesser ($D_{S\_i}$) der Sitzfläche (10) entspricht ($D_{K\_i} = D_{S\_i}$), und deren axial äußerer Durchmesser ($D_{K\_a}$) unter Berücksichtigung ungünstigster Bauteiltoleranzen und Wärmedehnungen größer als der Außendurchmesser ($D_{B\_a}$) des Rollbalgs (2) im Bereich des Endabschnittes (4) ist ($D_{K\_a} > D_{B\_a}$).

10. Verfahren zur Herstellung einer Luftfeder nach Anspruch 8, **dadurch gekennzeichnet, dass** der Endabschnitt (4) des Rollbalgs (2) durch axiales Einschieben in ein zuvor auf die Seitenwand (8') des Anschlussteils (6') aufgesetztes Montagewerkzeug (26) mit einem zylindrischen Ringkörper (28) und einer konischen Innenfläche (30) radial nach innen gestaucht wird, deren axial innerer Durchmesser ($D_{K\_i}$) dem Durchmesser ($D_{S\_i}$) der Sitzfläche (10) entspricht ($D_{K\_i} = D_{S\_i}$), und deren axial äußerer Durchmesser ($D_{K\_a}$) unter Berücksichtigung ungünstigster Bauteiltoleranzen und Wärmedehnungen größer als der Außendurchmesser ($D_{B\_a}$) des Rollbalgs (2) im Bereich des Endabschnittes (4) ist ($D_{K\_a} > D_{B\_a}$).

**Claims**

1. Air spring (1), e.g. of a vehicle axle, with a tubular rolling bellows (2) made of an elastomeric material which has at least one beadless and coreless end section (4), wherein this end section (4) is attached by means of an adhesive (24, 24') to a largely cylindrical seat surface (10) of a connecting part (6, 6', 6"), wherein the connecting part (6, 6', 6") on its side facing the rolling bellows (2) is shaped in a pot shape and a side wall (8, 8', 8") with a cylindrical inner surface (10) as well as a floor wall (12), and that the end section (4) of the rolling bellows (2) is attached to the inner surface (10) of the side wall (8, 8", 8") without a clamping ring by means of the adhesive (24, 24') which acts as a seat surface **characterized in that** the end section (4) of the roller bellows (2) in the area of the side wall (8, 8', 8") of the connecting part (6, 6', 6") is radially compressed over its circumference.

2. An air spring according to claim 1, **characterized in that** the outer diameter ($DB\_a$) of the rolling bellows (2) in the area of the end section (4) in the radially uncompressed state, taking into account the most unfavorable component tolerances and thermal expansions, is greater than the diameter ($DS\_i$) of the seat (10) of the connecting part (6, 6', 6") ($DB\_a > DS\_i$).

3. Air spring according to claim 1 or 2, **characterized in that** the side wall (8) of the connecting part (6) for the compression of the end portion (4) of the rolling bellows (2) has an axially outer mounting section (14) with a conical inner surface (16), wherein the axial inner diameter ($DK\_i$) of the conical inner surface (16) corresponds to the diameter ($DS\_i$) of the seat surface (10) ($DK\_i = DS\_i$), and the axial outer diameter ($DK\_a$) of the conical inner surface (16), taking into account the most unfavourable component tolerances and thermal expansions, is greater than the outer diameter ($DB\_a$) of the rolling bellows (2) in the area of the end section (4) ($DK\_a > DB\_a$).

4. An air spring according to any one of claims 1 to 2, **characterized in that** for the radial compression of the end portion (4) of the rolling bellows (2) the axial outer edge of the side wall (8') of the connecting part (6') is so formed that an assembly tool (26) with a cylindrical ring body (28) and a radial inner conical inner surface (30) can be placed on it, wherein the conical inner surface (30) has an axial inner diameter ($DK\_i$), which corresponds to the diameter ($DS\_i$) of the seat (10) ($DK\_i = DS\_i$), and whose axial outer diameter ($DK\_a$) is greater than the outer diameter ($DB\_a$) of the rolling bellows (2) in the area of the end section (4) ($DK\_a > DB\_a$), taking into account the most unfavourable component tolerances and thermal expansions.

5. Air spring according to one of claims 1 to 4, **characterized in that** the seat surface (10) of the side wall (8") of the connecting part (6") is axially limited externally by a circumferential bead (32) to protect against stripping of the adhesive (24').

6. An air spring according to any one of claims 1 to 5, **characterized in that** at least one ring-shaped seat bar (18) is arranged on the bottom wall (12) of the connecting part (6, 6', 6"), the radial distance ($\Delta RS$, $\Delta RS'$) from the seat surface (10) is largely equal to the sum of the thickness (dB) of the end portion (4) of the rolling bellows (2) and the thickness (dK, dK') of the adhesive layer (24, 24') corresponds to

$$(\Delta RS \approx dB + dK; \ \Delta RS' \approx dB + dK').$$

7. Air spring according to any one of claims 1 to 6, **characterized in that** on the floor wall (12) and the seat bar (18) of the connecting part (6, 6', 6") several radial guide bars (20) are arranged evenly distributed on the circumferential side, the respective radial outer surface (22) is conically bevelled and radially inclined inwards at an angle of 10° to 20° in relation to the radial outer surface of at least one seat bar (18).

8. Method for the production of an air spring 1, wherein a beadless and coreless end section (4) of a tubular rolling bellows (2) is attached by means of an adhesive (24, 24') to a largely cylindrical seat surface (10) of a connecting part (6, 6', 6"), with the following process steps:

   a) Application of the adhesive (24, 24') to a cylindrical inner surface (10) of a side wall (8, 8', 8") of the connecting part (6, 6', 6") on the side facing the rolling bellows (2) in a pot shape,
   b) circumferential and radial compression of the end section (4) of the rolling bellows (2), and
   c) axial insertion of the rolling bellows (2) into the connecting part (6, 6', 6") with the end section (4) of the rolling bellows (2) onto the seat (10) of the connecting part (6, 6', 6").

9. A method for the manufacture of an air spring according to claim 8, **characterized in that** the end portion (4) of the rolling bellows (2) is radially compressed inwards by axial insertion into the connecting part (6, 6', 6") on an outer mounting portion (14) of the side wall (8) of the connecting part (6) with a conical inner surface (16), the axial inner diameter of which (DK_i) corresponds to the diameter (DS_i) of the seat surface (10) (DK_i = DS_i), and whose axial outer diameter (DK_a), taking into account the most unfavourable component tolerances and thermal expansions, is greater than the outer diameter (DB_a) of the rolling bellows (2) in the area of the end section (4) (DK_a > DB_a).

10. A method for the manufacture of an air spring according to claim 8, **characterized in that** the end portion (4) of the rolling bellows (2) is radially compressed inwards by axial insertion into an assembly tool (26) previously placed on the side wall (8') of the connecting part (6') with a cylindrical ring body (28) and a conical inner surface (30), the axial inner diameter of which (DK_i) corresponds to the diameter (DS_i) of the seat surface (10) (DK_i = DS_i), and whose axial outer diameter (DK_a), taking into account the most unfavourable component tolerances and thermal expansions, is greater than the outer diameter (DB_a) of the rolling bellows (2) in the area of the end section (4) (DK_a > DB_a).

## Revendications

1. Ressort pneumatique (1), p.ex. d'un essieu de véhicule, avec un soufflet roulant tubulaire (2) en matériau élastomère qui a au moins une section d'extrémité sans talon et sans noyau (4), dans lequel cette section d'extrémité (4) est fixée au moyen d'un adhésif (24, 24') à une surface d'assise (10) largement cylindrique d'une pièce de liaison (6, 6', 6"), dans laquelle la pièce de liaison (6, 6', 6") sur son côté faisant face au soufflet roulant (2) est façonnée en forme de pot et une paroi latérale (8, 8', 8") avec une surface intérieure cylindrique (10) ainsi qu'une paroi de sol (12), et que la section d'extrémité (4) du soufflet roulant (2) est fixée à la surface intérieure (10) de la paroi latérale (8, 8", 8") sans bague de serrage au moyen de l'adhésif (24, 24') qui agit comme une surface d'assise **caractérisé en ce que** la section d'extrémité (4) du soufflet à rouleaux (2) dans la zone de la paroi latérale (8, 8', 8") de la pièce de liaison (6, 6', 6") est comprimée radialement sur sa circonférence.

2. Ressort pneumatique selon la revendication 1, **caractérisé en ce que** le diamètre extérieur (DB_a) du soufflet roulant (2) dans la zone de la section d'extrémité (4) à l'état radialement non comprimé, compte tenu des tolérances de composant et des dilatations thermiques les plus défavorables, est supérieur au diamètre (DS_i) du siège (10) de la pièce de liaison (6, 6', 6") (DB_a > DS_i).

3. Ressort pneumatique selon la revendication 1 ou 2, **caractérisé en ce que** la paroi latérale (8) de la pièce de liaison (6) pour la compression de la partie d'extrémité (4) du soufflet roulant (2) présente une section de montage axialement extérieure (14) avec une surface intérieure conique (16), dans laquelle le diamètre intérieur axial (DK_i) de la surface intérieure conique (16) correspond au diamètre (DS_i) de la surface d'assise (10) (DK_i = DS_i), et le diamètre extérieur axial (DK_a) de la surface intérieure conique (16), compte tenu des tolérances de composant et des dilatations thermiques les plus défavorables, est supérieur au diamètre extérieur (DB_a) du soufflet roulant (2) dans la zone de la section d'extrémité (4) (DK_a > DB_a).

4. Ressort pneumatique selon l'une quelconque des revendications 1 à 2, **caractérisé en ce que**, pour la compression radiale de la partie terminale (4) du soufflet roulant (2), le bord extérieur axial de la paroi latérale (8') de la pièce de liaison (6') est formé de telle sorte qu'un outil d'assemblage (26) avec un corps annulaire cylindrique (28) et une surface intérieure conique intérieure radiale (30) puisse être placé sur celui-ci, la surface intérieure conique (30) ayant un diamètre intérieur axial (DK_i), qui correspond au diamètre (DS_i) du siège (10) (DK_i = DS_i), et dont le diamètre extérieur axial (DK_a) est supérieur au diamètre extérieur (DB_a) du soufflet roulant (2) dans la zone de la section d'extrémité (4) (DK_a > DB_a), compte tenu des tolérances de composant et des dilatations thermiques les plus défavorables.

5. Ressort pneumatique selon l'une des revendications 1 à 4, **caractérisé en ce que** la surface d'assise (10) de la paroi latérale (8") de la pièce de liaison (6") est limitée axialement à l'extérieur par un cordon circonférentiel (32) pour protéger contre le décapage de l'adhésif (24').

6. Ressort pneumatique selon l'une quelconque des revendications 1 à 5, **caractérisé en ce qu'**au moins une barre d'assise en forme d'anneau (18) est disposée sur la paroi inférieure (12) de la pièce de liaison (6, 6', 6"), la distance radiale ($\Delta RS$, $\Delta RS'$) de la surface d'assise (10) est largement égale à la somme de l'épaisseur (dB) de la partie d'extrémité (4) du soufflet roulant (2) et de l'épaisseur (dK, dK') de la couche adhésive (24, 24') correspond à

$$(\Delta RS \approx dB + dK \; ; \; \Delta RS' \approx dB + dK').$$

**7.** Ressort pneumatique selon l'une quelconque des revendications 1 à 6, **caractérisé en ce que**, sur la paroi de plancher (12) et la barre d'assise (18) de la pièce de liaison (6, 6', 6"), plusieurs barres de guidage radiales (20) sont disposées uniformément réparties sur le côté circonférentiel, la surface extérieure radiale respective (22) est biseautée coniquement et inclinée radialement vers l'intérieur selon un angle de 10° à 20° par rapport à la surface extérieure radiale d'au moins une barre d'assise (18).

**8.** Procédé de production d'un ressort pneumatique 1, dans lequel une section d'extrémité sans cordon et sans noyau (4) d'un soufflet roulant tubulaire (2) est fixée au moyen d'un adhésif (24, 24') à une surface d'assise (10) largement cylindrique d'une pièce de liaison (6, 6', 6"), avec les étapes de processus suivantes :

a) Application de l'adhésif (24, 24') sur une surface intérieure cylindrique (10) d'une paroi latérale (8, 8', 8") de la partie de liaison (6, 6', 6") du côté faisant face au soufflet roulant (2) en forme de pot,
b) compression circonférentielle et radiale de la section d'extrémité (4) du soufflet roulant (2), et
c) insertion axiale du soufflet roulant (2) dans la partie de liaison (6, 6', 6") avec la section d'extrémité (4) du soufflet roulant (2) sur le siège (10) de la pièce de liaison (6, 6', 6").

**9.** Procédé de fabrication d'un ressort pneumatique selon la revendication 8, **caractérisé en ce que** la partie d'extrémité (4) du soufflet roulant (2) est comprimée radialement vers l'intérieur par insertion axiale dans la pièce de liaison (6, 6', 6") sur une partie de montage extérieure (14) de la paroi latérale (8) de la pièce de liaison (6) avec une surface intérieure conique (16), dont le diamètre intérieur axial ($DK_i$) correspond au diamètre ($DS_i$) de la surface d'assise (10) ($DK_i = DS_i$), et dont le diamètre extérieur axial ($DK_a$), compte tenu des tolérances de composant et des dilatations thermiques les plus défavorables, est supérieur au diamètre extérieur ($DB_a$) du soufflet roulant (2) dans la zone de la section d'extrémité (4) ($DK_a > DB_a$).

**10.** Procédé de fabrication d'un ressort pneumatique selon la revendication 8, **caractérisé en ce que** la partie d'extrémité (4) du soufflet roulant (2) est comprimée radialement vers l'intérieur par insertion axiale dans un outil d'assemblage (26) préalablement placé sur la paroi latérale (8') de la pièce de liaison (6') avec un corps d'anneau cylindrique (28) et une surface intérieure conique (30), dont le diamètre intérieur axial ($DK_i$) correspond au diamètre ($DS_i$) de la surface d'assise (10) ($DK_i = DS_i$), et dont le diamètre extérieur axial ($DK_a$), compte tenu des tolérances de composant et des dilatations thermiques les plus défavorables, est supérieur au diamètre extérieur ($DB_a$) du soufflet roulant (2) dans la zone de la section d'extrémité (4) ($DK_a > DB_a$).

Fig.1

Fig.2

Fig.3

Fig.4

Fig.5

**IN DER BESCHREIBUNG AUFGEFÜHRTE DOKUMENTE**

**In der Beschreibung aufgeführte Patentdokumente**

- US 5005808 A
- DE 10050777 B4
- DE 19740981 A1
- DE 102006033197 A1
- DE 102010036363 A1
- DE 102008025905 A1
- DE 102016219813 A1